# EUROPEAN PATENT SPECIFICATION

(11) **EP 3 659 089 B1**
(45) Date of publication and mention of the grant of the patent: **06.08.2025**
(21) Application number: 18753452.4
(22) Date of filing: 30.07.2018
(51) Int. Cl.: G06Q 20/38

(54) **KEY GENERATION IN SECURE ELECTRONIC PAYMENT SYSTEMS**
SCHLÜSSELERZEUGUNG IN SICHEREN ELEKTRONISCHEN BEZAHLSYSTEMEN
GÉNÉRATION DE CLÉ DANS DES SYSTÈMES DE PAIEMENT ÉLECTRONIQUE SÉCURISÉS

(30) Priority: 28.07.2017 GB 201712138
(43) Date of publication of application: 03.06.2020
(73) Proprietor: Streeva Ltd, Guildford, Surrey GU1 2AG (GB)
(72) Inventor: MICHAEL, David, Guildford Surrey GU2 7ND (GB)
(74) Representative: Murgitroyd & Company
(86) International application number: PCT/GB2018/052166
(87) International publication number: WO 2019/021028

(56) References cited:
- WO-A1-2016/063089
- US-A1- 2017 148 021

## Description

### Technical Field

The present invention relates to methods, apparatus and computer programs for generating a key in a secure electronic payment system.

### Background

Electronic payment systems require multiple parties to be able to share data between one another in a secure manner, in order to carry out an electronic transaction. For example, to carry out a transaction in a card payment system, the retailer ('Merchant'), the retailer's bank ('Acquirer'), the card provider ('Scheme') and the customer's bank ('Issuer') must all be able to communicate securely with one another. To this end, the Merchant, Acquirer, Scheme and Issuer must all be provided in advance with secure encryption keys, in a process referred to as key provisioning. The parties may also be provided with certificates for the purposes of authentication.

Dedicated infrastructure, for example in the form of a key management system or certification authority, is required in order to securely distribute the necessary security information such as keys and certificates to the various parties within the electronic payment system. As a result, the cost and complexity of implementing a secure electronic payment system is increased. There is therefore a need in the art for an improved method to allow devices within an electronic payment system to securely communicate with one another and share data in a secure manner.

WO 2016/063089 A1 describes a method for securing transaction messages by encrypting transaction identifiers using a shared secret derived from cryptographic operations.

The invention is made in this context.

### Summary of the Invention

According to a first aspect of the present invention, there is provided a method of generating a key in a secure electronic payment system, the method comprising obtaining unique transaction data relating to a transaction, the unique transaction data comprising a plurality of bits, normalising the plurality of bits of the transaction data according to a predetermined normalisation format, generating a transaction identifier for uniquely identifying the transaction among a plurality of transactions by applying a first predetermined key derivation function to the normalised unique transaction data, generating an encryption key based on the normalised unique transaction data, using a second predetermined key derivation function, obtaining additional data associated with the transaction identifier, and decrypting the obtained additional data using the generated encryption key.

In some embodiments according to the first aspect, the plurality of bits that are normalised comprises a subset of a total number of bits included in the unique transaction data. In some embodiments the unique transaction data includes high-variance data and low-variance data, the high-variance data having a higher variance between transactions than the low-variance data, and the plurality of bits that are normalised comprise at least the bits of the high-variance data. For example, in some embodiments the electronic payment system is an EMV card payment system, and the high-variance data comprises at least a first plurality of bits included in an Application Cryptogram ARQC field and/or a second plurality of bits included in an Unpredictable Number field. In other embodiments, the electronic payment system may be a 3D Secure-payment system, and the high-variance data can comprise at least a first plurality of bits included in an XID field. In another embodiment, the electronic payment system is a 3D Secure-payment system, and the high-variance data comprises at least a first plurality of bits included in an XID field.

In some embodiments according to the first aspect, the first predetermined key derivation function and/or the second predetermined key derivation function is selected from among a plurality of available key derivation functions.

In some embodiments according to the first aspect, the encryption key is generated at a first device in the secure electronic payment system, and obtaining the additional data comprises receiving the encryption key from the first device, at a second device, and receiving the additional data from a third device, at the second device, wherein the encryption key received from the first device is used to decrypt the additional data at the second device. For example, in some embodiments the encryption key can be used to decrypt the additional data at the second device by generating a private key from the encryption key at the second device, and using the private key to decrypt the additional data.

In some embodiments, obtaining the additional data comprises retrieving the additional data associated with the transaction identifier, from storage configured store a plurality of sets of additional data each associated with a different transaction identifier. Furthermore, in some embodiments generating the transaction identifier comprises combining the normalised unique transaction data with the encryption key to obtain combined data, and applying the first predetermined key derivation function to the combined data to generate the transaction identifier.

According to a second aspect of the present invention, there is provided a computer-readable storage medium arranged to store computer program instructions which, when executed, perform a method according to the first aspect.

According to a third aspect of the present invention, there is provided apparatus for generating a key in a secure electronic payment system, the apparatus comprising a data normalisation module configured to obtain unique transaction data relating to a transaction, the unique transaction data comprising a plurality of bits, and normalise the plurality of bits of the transaction data according to a predetermined normalisation format, a key generator configured to generate a transaction identifier for uniquely identifying the transaction among a plurality of transactions by applying a first predetermined key derivation function to the normalised unique transaction data, and generate an encryption key based on the normalised unique transaction data, using a second predetermined key derivation function, and a decryption unit configured to obtain additional data associated with the transaction identifier and decrypt the obtained additional data using the generated encryption key.

According to a fourth aspect of the present invention, there is provided apparatus for generating a key in a secure electronic payment system, the apparatus comprising one or more processors for executing computer program instructions, and memory arranged to store computer program instructions which, when executed by the one or more processors, cause the apparatus to obtain unique transaction data relating to a transaction, the unique transaction data comprising a plurality of bits, normalise the plurality of bits of the transaction data according to a predetermined normalisation format, generate a transaction identifier for uniquely identifying the transaction among a plurality of transactions by applying a first predetermined key derivation function to the normalised unique transaction data. generate an encryption key based on the normalised unique transaction data, using a second predetermined key derivation function, obtain additional data associated with the transaction identifier, and decrypt the obtained additional data using the generated encryption key.

### Brief Description of the Drawings

Embodiments of the present invention will now be described, by way of example only, with reference to the accompanying drawings, in which:
Figure 1 illustrates a secure electronic payment system comprising a plurality of entities, according to an embodiment of the present invention;
Figure 2 illustrates apparatus for generating an identifier (ID) key and a private key from unique transaction data in a secure electronic payment system, according to an embodiment of the present invention;
Figure 3 illustrates apparatus for generating an ID key and a private key from unique transaction data in a secure electronic payment system, according to an embodiment of the present invention;
Figure 4 is a flowchart showing a method of encrypting and storing data in a secure electronic payment system, according to an embodiment of the present invention;
Figure 5 is a flowchart showing a method of accessing encrypted data in a secure electronic payment system, according to an embodiment of the present invention;
Figure 6 illustrates apparatus for accessing encrypted data in a secure electronic payment system, according to an embodiment of the present invention; and
Figure 7 illustrates apparatus for accessing encrypted data in a secure electronic payment system, according to an embodiment of the present invention.

### Detailed Description

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification. In those drawings which illustrate apparatus, rounded boxes are used to denote functional elements whilst square boxes denote input/output data. Depending on the requirements of any embodiment, the function elements of any particular apparatus may be implemented in hardware or in software.

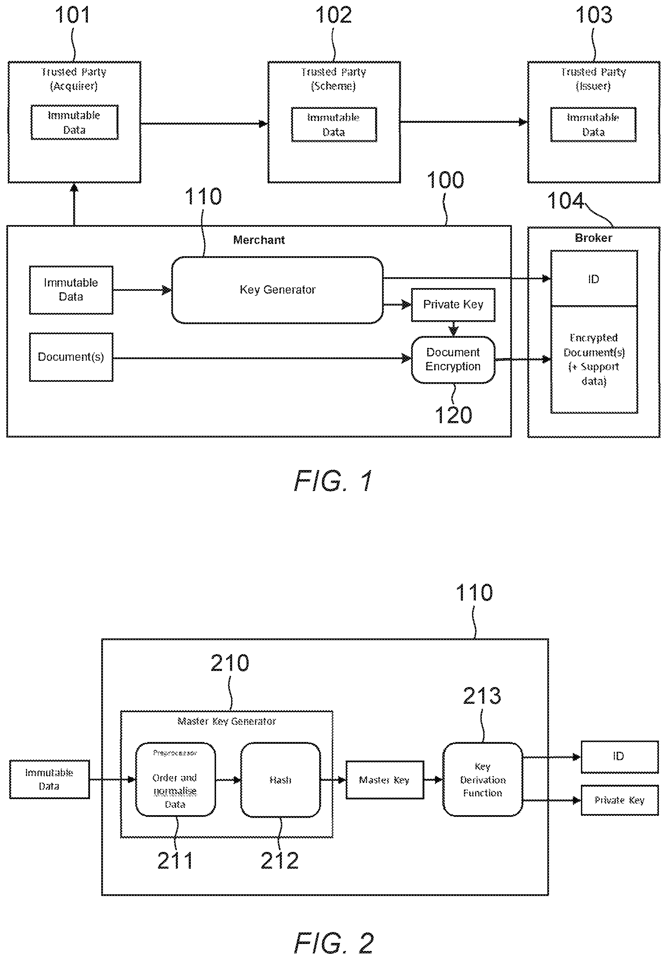

Referring now to Fig. 1, a secure electronic payment system comprising a plurality of entities is illustrated, according to an embodiment of the present invention. In the present embodiment, the secure electronic payment system is a card payment system configured according to the EMV technical standard. The EMV standard is used in a wide range of secure electronic payment systems, such as chip and pin and contactless payment systems based around payment cards, smartphones or other tokenised payment devices. However, it should be understood that the present invention is not limited to use with the EMV standard, and in other embodiments the principles disclosed herein may be applied to other types of secure electronic payment systems, such as messaging service-based payment systems.

In the present embodiment the electronic payment system comprises a Merchant apparatus 100, Acquirer apparatus 101, Scheme apparatus 102, Issuer apparatus 103, and broker apparatus 104. The various apparatuses in Fig. 1 can communicate via any suitable connection, such as wired or wireless network interfaces. For example, the Merchant apparatus 100 can be an Electronic Point Of Sale (EPOS) device, and the Acquirer, Scheme, Issuer and broker apparatuses 101, 102, 103, 104 can be servers operated by the respective parties. Here, the Merchant, Acquirer, Scheme and Issuer are used in the conventional sense to denote different entities in an EMV system. In the present embodiment, the broker is a third party which mediates between the Merchant and other devices, such as a client device belonging to the customer.

In the system shown in Fig. 1, a transaction is initiated when a customer submits a purchase request to a merchant using a contactless EMV bank card, for example either in person in a store or online via the merchant's website. During the transaction process the Merchant's EPOS device 100, in conjunction with the customer's payment card, creates a message that will ultimately be used to instruct the Issuer to transfer funds from the customer's account to the Acquirer. This message contains a number of immutable fields that remain unchanged while the message is passed securely between trusted parties from the merchant to the card issuer. The data contained in the immutable fields is hereinafter referred to as immutable data. Since the immutable data does not change as the message is passed from one party to another, all parties in the payment system which have access to the message can access the same immutable data.

As shown in Fig. 1, the Merchant apparatus 100 comprises a key generator 110 and a data encryption unit 120. The key generator 110 is configured to receive the immutable data, and apply predefined normalisation and key derivation functions to the immutable data to generate an identifier and private key for the current transaction. In the present embodiment the identifier is an ID key comprising a 256-bit number that for practical purposes can be assumed to be unique. However, in other embodiments a different form of identifier may be used, for example a 128-bit universally unique identifier (UUID).

The key derivation function may be any suitable one-way algorithm which is capable of generating a key from the immutable data, such as a cryptographic hashing function or a block cipher. In general the ID key and the private key may both be referred to as keys. For example, the ID key may be used as a key in a key-value database to retrieve stored data ('value') associated with the ID key ('key'). The private key may be used for encryption or decryption, and so may be referred to as an encryption key. Although in the present embodiment keys are generated from immutable data in an EMV transaction, in other embodiments the keys may be generated from suitable transaction data relating to a transaction in any electronic payment system.

As shown in Fig. 1, the data encryption unit 120 uses the private key that is generated by the key generator 110 to encrypt one or more documents. The documents can comprise any data relating to the transaction, including data other than the original transaction message and immutable data. For example, in some embodiments the data that is encrypted by the data encryption unit 120 can include data that is provided to the customer by the Merchant following successful completion of the transaction, such as an electronic payment receipt, or digital content that the customer has purchased through the transaction.

The normalisation and key derivation functions that are used by the key generator 110 are predefined, in the sense that they are defined in advance of the transaction being carried out. In this way, any trusted parties in the secure electronic payment system which have access to the immutable data and knowledge of the predefined normalisation and key derivation functions, can derive the same key(s) as the Merchant 100 in order to access the original data. At the same time, other third parties can be prevented from accessing and decrypting the data. The Merchant 100 can therefore encrypt the documents, associate them with the ID key, and send the encrypted documents to a third party such as the broker 104.

In the present embodiment the broker 104 can store encrypted data relating to a plurality of transactions in a database, in which each set of encrypted data is associated with the ID key of the respective transaction, and can retrieve the encrypted data for a particular transaction upon a request from another entity which includes the ID key of the transaction. The ID key allows the broker 104 to uniquely identify the data for a particular transaction among the plurality of sets of encrypted data stored in the database. However, since the broker 104 does not have access to the immutable data, the broker 104 cannot decrypt the merchant's data. This approach allows the Merchant 100 to securely share any necessary data with other trusted parties, such as the customer, Acquirer, Scheme or Issuer, via a third party intermediary (e.g. the broker 104) without compromising the security of the data. At the same time, since the existing transaction data is used to derive the keys that are used to encrypt and identify the protected data, it is not necessary to distribute any additional keys or certificates to the trusted parties.

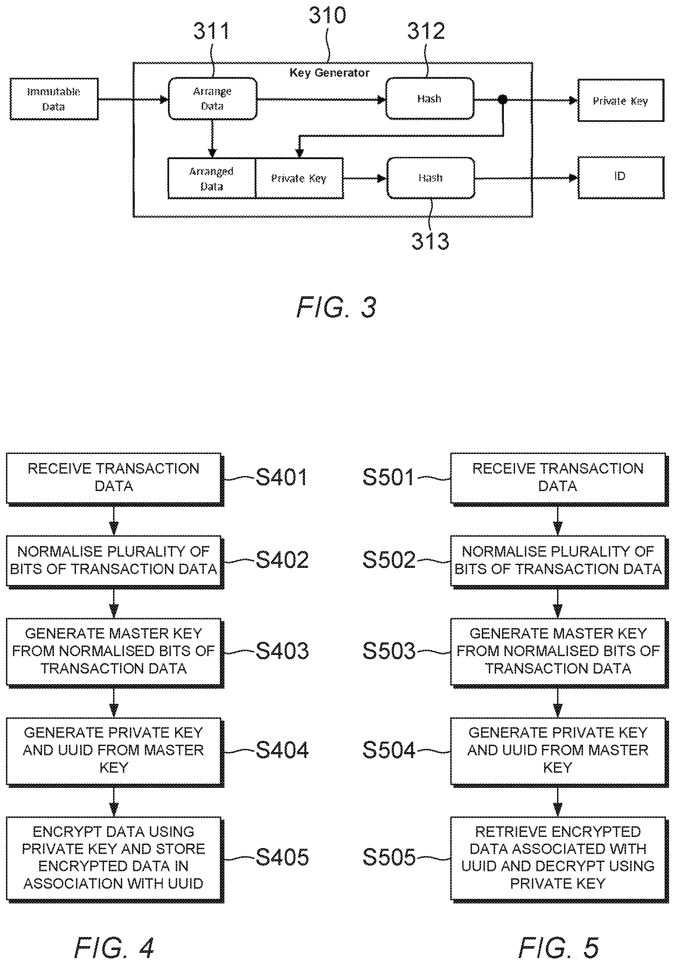

Methods of generating the ID key and private key will now be described in more detail with reference to Figs. 2 and 3. Figure 2 illustrates apparatus for generating an ID key and a private key from unique transaction data in a secure electronic payment system, according to an embodiment of the present invention. In the present embodiment the apparatus is included in the key generator 110 used by the Merchant 100 in the system of Fig. 1. However, as will become apparent from the following description, in other embodiments the steps involved in generating a key (e.g. an ID key or private key) may be performed at physically separate devices, and do not all need to be performed by the same device.

The apparatus 110 comprises a data normalisation module 211 and a key generator 212 which together generate a master key from the immutable data. The data normalisation module 211 is configured to obtain the immutable data and normalise a plurality of bits of the transaction data according to a predetermined normalisation format. The immutable data can be any unique transaction data which is unique to the current transaction, and which is available to any trusted parties which need to be able to derive the private key and/or ID key. It should be understood that in this context, 'unique' does not necessarily imply that the probability of the same transaction data being generated for different transactions is precisely zero, but rather that 'unique' should be interpreted as meaning that the probability of two transactions sharing the same transaction data is vanishingly small, so as to be negligible. As explained above, during a transaction in a secure electronic payment system a message is passed between the various parties that are involved in the transaction, in order to instruct payment. This message may be referred to as a transaction message. The unique transaction data that is used in key generation can be taken from bits of the transaction message that are immutable, in the sense that the value of the bits does not change as the message is passed from one party to another.

The normalisation module 211 is configured to take as an input the immutable data that is included in the transaction message, and reformat the data according to a predefined normalisation format. Here, normalisation refers to the process of converting information conveyed by the immutable data to a standardised representation. Normalisation ensures that the data that is provided to the hashing function will always be represented in exactly the same way regardless of the format in which the immutable data is received by a particular entity, so that the output of the hash function will be the same. For example, a string "£12.23" has the same meaning (i.e. conveys the same information) as "GBP 12.23", but both of these data entries would result in different outputs when processed by the hash function 212 as a result of the different data formats. The normalisation module 211 can re-format the immutable data according to a standardised format, for example "GBP:1223", thereby ensuring that the output of the hashing function 212 will be the same regardless of the original format of the immutable data. Also, in embodiments in which bits from a plurality of different fields in the transaction data are used to generate the key, the normalisation process can include a step of arranging the fields in a predefined order.

In electronic payment systems, the format in which the immutable data is held may change as the transaction message is passed from one entity to the next. Normalisation therefore ensures that each entity which has access to the immutable data can generate the same key. For example, different payment interfaces may take the data in different forms, such as a string "12.23", or as a hexadecimal in minor units (e.g. 0x4C7) which could also be stored as either binary data or as a string.

In the present embodiment, all bits of the immutable data are used as the input to the normalisation module 211 and the key generator 212. Alternatively, in other embodiments, the plurality of bits that are normalised may only comprise a subset of a total number of bits that are included in the unique transaction data. For example, in some embodiments the unique transaction data includes high-variance data and low-variance data. Here, the term 'high-variance data' is used to refer to bits among the immutable data which have a higher variance between transactions than the other bits of the immutable data, which conversely can be referred to as 'low-variance data'. In the present embodiment, the plurality of bits that are normalised by the data normalisation module 211 comprise at least the bits of the high-variance data. Using high-variance data increases security, by making it harder for a third party to use a brute-force approach to crack the encryption by guessing different values of the immutable data. In some embodiments, the plurality of bits that are normalised by the data normalisation module 211 may also comprise the bits of the low-variance data. Using the low-variance data in addition to the high-variance data can further reduce the risk of collisions. Here, a 'collision' refers to the same key being generated from transaction data for two or more separate transactions. Furthermore, in some embodiments the plurality of bits that are normalised by the data normalisation module 211 may only include the bits of the low-variance data without using the bits of the high-variance data.

In the example of an EMV system, the message passed between trusted parties during a transaction includes at least 96 bits of high variance data, along with a further few hundred bits of low to medium variance data. Examples of high-variance data in an EMV system include the bits contained in an Application Cryptogram (ARQC) field and the bits included in an Unpredictable Number field. Accordingly, in one EMV-based embodiment of the present invention, the data normalisation module 211 can be configured to use a first plurality of bits from the ARQC field and/or a second plurality of bits from the Unpredictable Number field as the unique transaction data. As another example, in a 3D Secure-based embodiment of the present invention, the key generation apparatus 210 can be configured to derive the key based on at least the data included in the XID (merchant unique identifier) and CAVV fields from a payment authorisation message that is passed between the trusted parties. For example, the XID value may be combined with the Card Acceptor identification code and Acquiring institution identification codes in order to obtain globally unique transaction data. In a 3D Secure 2.0-based system, the Authentication Value constitutes high-variance data that may be used by the key generation apparatus 210 to derive the key. The Authentication Value is a cryptographic value that is used by the authorisation system during authorisation processing in order to validate the integrity of the authorisation result. The current EMVco 3D Secure v2.0 specification defines the Authentication Value as a 20 byte cryptographic value generated per transaction, however, it will be appreciated that in other versions of the standard a different size could be defined for the Authentication Value field.

The normalised bits of the unique transaction data are then passed to the key generator 212, which is configured to generate a master key by applying a predetermined key derivation function to the normalised bits of the transaction data. The predetermined key derivation function used by the key generator 212 may be selected from among a plurality of available key derivation functions using certain rules. For example, in some embodiments the key generator 212 may be provided in advance with a list of predetermined key derivation functions, and may switch from using one key derivation function to the next function on the list when a certain condition is fulfilled, for example when the previous function has been used a certain number of times or has been in use for a certain time period. It will be appreciated that corresponding key generators used by other devices in the secure electronic payment system should also be configured to apply the same rules as the key generator 212 used by the Merchant 100, to ensure that each party selects the same key derivation function and derives the same key. In other embodiments, the key generator 212 may be configured to always use the same key derivation function at all times. In some embodiments, the key derivation function itself may be transmitted to another party along with data that has been encrypted using the derived key. For example, in one embodiment the Merchant apparatus 100 may send the key derivation function and encryption methods to another party in the system, along with the encrypted data.

The apparatus 110 further comprises a key derivation function 213 configured to generate an ID key and private key from the master key. The key derivation function 213 can be configured to use any suitable predetermined one-way function to derive each of the ID key and the private key from the master key, for example a cryptographic hashing function. Using a one-way function ensures that the private key cannot be derived by the ID key.

Referring now to Fig. 3, apparatus for generating an ID key and a private key from unique transaction data in a secure electronic payment system is illustrated, according to an alternative embodiment of the present invention. In this embodiment, the apparatus 310 comprises a data normalisation module 311 and a key generator 312. The data normalisation module 311 and a key generator 312 of the present embodiment are similar to the data normalisation module 211 and key generator 212 described above in relation to Fig. 2, and a detailed explanation will not be repeated here.

In the present embodiment, the key outputted by the key generator 312 is used directly as the private key for encrypting or decrypting data. For example, the key generated by the key generator 312 can be used to decrypt encrypted data retrieved from the broker 104 using the ID key. The key generator 312 uses a first predetermined key derivation function, such as a hashing function, to generate the private key. The apparatus 310 further comprises a second key derivation function 313 configured to generate the ID key. In the present embodiment, the input data to the second key derivation function is obtained by concatenating a copy of the normalised data outputted by the data normalisation module 311 with the private key generated by the key generator 312. This has the effect of salting the private key, so as to protect against lookup table attacks and any currently unknown weaknesses that could otherwise potentially be exploited to determine the hash function. Although in the present embodiment the re-ordered bits are concatenated with the private key, in other embodiments a different method of combining the re-ordered bits with the private key may be used. For example, in another embodiment the normalised bits may be interleaved with the bits of the private key before being inputted to the second key derivation function 313.

In the embodiment shown in Fig. 3, the output of the first key derivation function 312 is used as a private key, and the output of the second key derivation function 313, which is derived based on the output of the first key derivation function 312, is used as the ID. However, in another embodiment the output of the first key derivation function 312 may be used as the ID, and the output of the second key derivation function 313 may be used as the private key.

Referring now to Fig. 4, a flowchart is illustrated showing a method of encrypting and storing data in a secure electronic payment system, according to an embodiment of the present invention. For example, the method may be used by the Merchant 100 of Fig. 1 to encrypt data and send the encrypted data to the broker 104 for storage.

First, in step S401, unique transaction data relating to a transaction is obtained. During step S401, the unique transaction data may be generated or may be received from another entity in the secure electronic payment system. For example, when implemented at the Merchant 100, the transaction data may be generated in step S401 in conjunction with the payment card. Alternatively, when the method is implemented at another entity such as the Acquirer 101, Scheme 102 or Issuer 103, the unique transaction data can be obtained from the received transaction message.

Next, in step S402 a data normalisation module re-orders a plurality of bits of the transaction data according to a predetermined normalisation format, as described above in relation to Figs. 2 and 3. Then, in step S403 a key generator generates a key by applying a predetermined key derivation function to the normalised bits of the transaction data. In the present embodiment, a further step S404 is carried out in which a second predetermined key derivation function is used to derive a private key and ID key from the master key, as in the embodiment of Fig. 2. However, as explained above with reference to Fig. 3, in other embodiments the step of generating a private key and/or ID key in S404 may be omitted, and the master key may be used directly as the private key or as the ID key.

Finally, in step S405, additional data is encrypted using the private key derived in step S404, and the encrypted data is stored in association with the ID key derived in step S404. Here, 'additional data' refers to data other than the unique transaction data.

Referring now to Fig. 5, a flowchart is illustrated showing a method of accessing encrypted data in a secure electronic payment system, according to an embodiment of the present invention. The method shown in Fig. 5 can be used by another entity in the secure electronic payment system to access data that has been encrypted using the method shown in Fig. 4. In steps S501 to S504, a private key and ID key are derived using the same method as described above in relation to steps S401 to S404 of Fig. 4, and a detailed explanation will not be repeated here. In this way, the same private key and ID key is derived in each of the methods of Figs. 4 and 5. In step S505 of Fig. 5, the ID key is used to retrieve stored encrypted data, and the retrieved encrypted data is then decrypted using the private key.

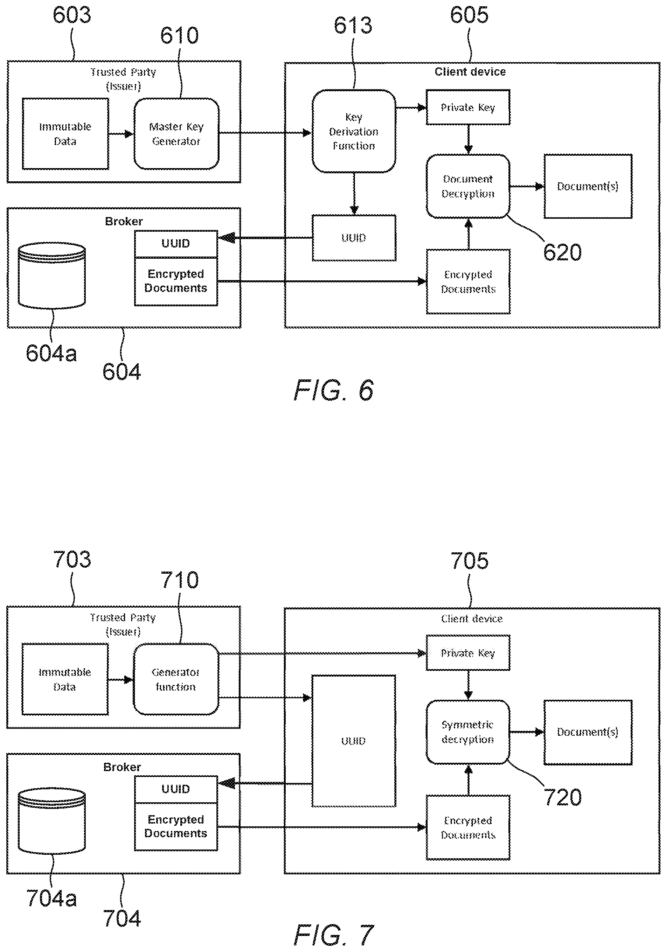

Referring now to Fig. 6, apparatus for accessing encrypted data in a secure electronic payment system is illustrated, according to an embodiment of the present invention. In the present embodiment a client device 605, for example a smartphone belonging to the customer, is used to access encrypted data held by a broker 604. The client device 605 receives a master key from the Issuer apparatus 603, which includes a key generator 610 configured to generate the master key from the unique transaction data using a first key derivation function.

The client device 605 comprises a second key generator 613 configured to apply a second key derivation function to generate a private key and ID key from the master key supplied by the Issuer 603. The client device 605 then transmits the ID key from the broker 604, which retrieves encrypted data associated with the ID key from a database held in storage 604a and returns the encrypted data to the client device 605. The client device further comprises a decryption unit 620 configured to decrypt the data received from the broker 604 using the private key generated by the second key generator 613, in order to access the original unencrypted data.

In this embodiment, the private key used to decrypt the additional data is therefore generated at a different device to the one at which the master key is generated. This approach provides an additional element of security, since the client device 605 does not need to be provided with the first key derivation function, and therefore can only access the original unencrypted data once it has been provided with the corresponding master key by the Issuer 603 or by another of the trusted parties in the secure electronic payment system.

Furthermore, in some embodiments only the Merchant 100 and the client device 605 may be provided with the second key derivation function 613, and the second key derivation function 613 may not be known even to the other trusted parties such as the Acquirer 101, Scheme 102 and Issuer 103. This approach enables the additional data to only be decrypted on the client device 605 and presented to the customer, without either the financial network (Acquirer, Scheme and Issuer) or other third parties being able to access the decrypted data. This provides a method whereby the Merchant 100 can securely send additional data such as digital content to a customer with end-to-end encryption, in such a way that the commercially sensitive transaction data can only be received and accessed by the customer.

Referring now to Fig. 7, apparatus for accessing encrypted data in a secure electronic payment system is illustrated, according to an embodiment of the present invention. Like the embodiment of Fig. 6, in the present embodiment a client device 705 retrieves encrypted data from a database 704a stored at a broker 704, using an ID key, and decrypts the data using a private key. However, in the present embodiment the Issuer 703 includes a key generator 710 that is configured to generate both the private key and the ID key, and provide the generated private key and ID key to the client device 705. The client device 705 then forwards the ID key to the broker 704 in order to retrieve the encrypted data, and uses a decryption unit 720 to decrypt the data returned by the broker 704.

Embodiments of the present invention have been described which enable parties in a secure electronic payment system to securely share data with one another without the need to provide additional keys, since each party can derive the necessary keys from existing transaction data. For example, encrypted data can be stored at an intermediary third party for later retrieval by the customer. This approach can enable new solutions for delivering digital media as part of the card payment process. For example, in one embodiment a photographer could use a method such as the one shown in Fig. 4 to encrypt digital photos in such a way that the customer can then retrieve and access the photos using just the original transaction data, without having to provide any additional personal information to verify their identity such as a name or email address.

Furthermore, although embodiments of the invention have been described in relation to an EMV card-based payment system, it should be understood that the invention is not limited to this type of secure electronic payment system. In general, aspects of the present invention may be applied to any type of secure electronic payment system in which unique transaction data is shared between parties in the system, for example high variance immutable data shared by the Merchant and the customer's payment agent (Issuer) in an online payment system such as 3d Secure.

Finally, embodiments of the invention have been described in relation to deriving a private key and ID key for securely sharing encrypted data between parties. In other embodiments, the same principles described above in relation to deriving a private key and/or ID key may be utilised to generate a key for a different purpose, for example for applying symmetric encryption to part of the data in the transaction message. This can provide additional security by ensuring that even if the transaction message was intercepted by a third party, the encrypted part of the message could not be decrypted without knowledge of the predetermined sequence and the predetermined key derivation function that are needed to derive the symmetric encryption key. Furthermore, in some embodiments of the present invention the merchant may pass data to the broker without encryption, for example when the broker is trusted by the merchant. In such embodiments the output of the key generator can be used as an ID key to allow the broker to store and subsequently retrieve the data received from the merchant, without separately generating a private key for encryption.

In embodiments of the present invention, a transaction ID is derived from unique data relating to a transaction. In this way, the transaction ID and the encryption key can be derived from transaction data that is available to all card schemes and issuers. This approach allows an issuer, for example, to retrieve data for transactions in situations where the issuer does not have knowledge of the identifiers of the merchant or the payment device. Such a scenario can occur when a tokenised payment device, such as a smartphone, presents a PAN (Primary Account Number/Long card number) to the merchant that is subsequently translated at the card scheme to the customer's card PAN, with the customer's card PAN being passed to the issuer. Embodiments of the present invention can therefore allow transactions to be linked from the issuer side to the merchant side without the issuer having access to the PAN that was provided to the merchant.

Additionally, generating a transaction identifier from unique transaction data allows multiple merchants to participate in the system without needing to coordinate to avoid collisions between identifiers, since the transaction identifier is dependent on unique transaction data. As a further benefit, because the generated transaction identifier does not directly identify a merchant, in embodiments of the present invention merchants can provide receipt data (for example, through a third party such as a payments service provider) in such a manner that no commercially sensitive information can be derived through the metadata, such as the total number of transactions conducted by the merchant, dates and times of transactions, and so on. Embodiments of the present invention can therefore ensure security of merchants' commercially sensitive information, by storing additional data for a transaction using an identifier that is generated from unique transaction data for the transaction.

Whilst certain embodiments of the invention have been described herein with reference to the drawings, it will be understood that many variations and modifications will be possible without departing from the scope of the invention as defined in the accompanying claims.

## Claims

1. A method of generating a key in a secure electronic payment system, the method comprising:
obtaining (S501) unique transaction data relating to a transaction, the unique transaction data comprising a plurality of bits;
normalising (S502) the unique transaction data according to a predetermined normalisation format;
generating (S503) a transaction identifier for uniquely identifying the transaction among a plurality of transactions by applying a first predetermined key derivation function to the normalised unique transaction data;
generating (S504) an encryption key based on the normalised unique transaction data, using a second predetermined key derivation function;
obtaining (S505) additional data associated with the transaction identifier, the additional data being data other than the unique transaction data that has been stored in association with the transaction identifier and encrypted using the encryption key; and
decrypting (S505) the obtained additional data using the generated encryption key.

2. The method of claim 1, wherein the plurality of bits that are normalised comprises a subset of a total number of bits included in the unique transaction data.

3. The method of claim 2, wherein the unique transaction data includes high- variance data and low-variance data, the high-variance data having a higher variance between transactions than the low- variance data, and the plurality of bits that are normalised comprise at least the bits of the high-variance data.

4. The method of claim 3, wherein the electronic payment system is an EMV payment system, and the high-variance data comprises at least a first plurality of bits included in an Application Cryptogram ARQC field and/or a second plurality of bits included in an Unpredictable Number field.

5. The method of claim 3, wherein the electronic payment system is a 3D Secure- payment system, and the high-variance data comprises at least a first plurality of bits included in an XID field.

6. The method of claim 3, wherein the electronic payment system is a 3D Secure v2-payment system, and the high-variance data comprises at least a first plurality of bits included in an Authentication Value field.

7. The method of any one of the preceding claims, wherein the first predetermined key derivation function and/ or the second predetermined key derivation function is selected from among a plurality of available key derivation functions.

8. The method of any one of the preceding claims, wherein the encryption key is generated at a first device in the secure electronic payment system, and obtaining the additional data comprises:
receiving the encryption key from the first device, at a second device; and
receiving the additional data from a third device, at the second device, wherein the encryption key received from the first device is used to decrypt the additional data at the second device.

9. The method of claim 8, wherein using the encryption key to decrypt the additional data at the second device comprises:
generating a private key from the encryption key at the second device; and
using the private key to decrypt the additional data.

10. The method of any one of the preceding claims, wherein obtaining the additional data comprises:
retrieving the additional data associated with the transaction identifier, from storage configured store a plurality of sets of additional data each associated with a different transaction identifier.

11. The method of any one of the preceding claims, wherein generating the transaction identifier comprises:
combining the normalised unique transaction data with the encryption key to obtain combined data; and
applying the first predetermined key derivation function to the combined data to generate the transaction identifier.

12. A computer-readable storage medium arranged to store computer program instructions which, when executed, perform a method according to any one of the preceding claims.

13. Apparatus for generating a key in a secure electronic payment system, the apparatus comprising:
a data normalisation module configured to obtain unique transaction data relating to a transaction, the unique transaction data comprising a plurality of bits, and normalise the plurality of bits of the transaction data according to a predetermined normalisation format;
a key generator (613) configured to generate a transaction identifier for uniquely identifying the transaction among a plurality of transactions by applying a first predetermined key derivation function to the normalised unique transaction data, and generate an encryption key based on the normalised unique transaction data, using a second predetermined key derivation function; and
a decryption unit (620) configured to obtain additional data associated with the transaction identifier, and decrypt the obtained additional data using the generated encryption key,
wherein the additional data being data other than the unique transaction data that has been stored in association with the transaction identifier and encrypted using the encryption key.

14. Apparatus for generating a key in a secure electronic payment system, the apparatus comprising:
one or more processors for executing computer program instructions; and memory arranged to store computer program instructions which, when executed by the one or more processors, cause the apparatus to:
obtain unique transaction data relating to a transaction, the unique transaction data comprising a plurality of bits;
normalise the plurality of bits of the transaction data according to a predetermined normalisation format;
generate a transaction identifier for uniquely identifying the transaction among a plurality of transactions by applying a first predetermined key derivation function to the normalised unique transaction data;
generate an encryption key based on the normalised unique transaction data, using a second predetermined key derivation function;
obtain additional data associated with the transaction identifier; and
decrypt the obtained additional data using the generated encryption key,
wherein the additional data being data other than the unique transaction data that has been stored in association with the transaction identifier and encrypted using the encryption key.

## Patentansprüche

1. Ein Verfahren zum Erzeugen eines Schlüssels in einem sicheren elektronischen Bezahlsystem, wobei das Verfahren Folgendes beinhaltet:
Erhalten (S501) eindeutiger Transaktionsdaten, die sich auf eine Transaktion beziehen, wobei die eindeutigen Transaktionsdaten eine Vielzahl von Bits beinhalten;
Normalisieren (S502) der eindeutigen Transaktionsdaten gemäß einem vorherbestimmten Normalisierungsformat;
Erzeugen (S503) eines Transaktionsidentifikators zum eindeutigen Identifizieren der Transaktion unter einer Vielzahl von Transaktionen durch Anwenden einer ersten vorherbestimmten Schlüsselableitungsfunktion auf die normalisierten eindeutigen Transaktionsdaten;
Erzeugen (S504) eines Verschlüsselungsschlüssels basierend auf den normalisierten eindeutigen Transaktionsdaten, unter Verwendung einer zweiten vorherbestimmten Schlüsselableitungsfunktion;
Erhalten (S505) zusätzlicher Daten, die mit dem Transaktionsidentifikator assoziiert sind, wobei die zusätzlichen Daten Daten sind, die sich von den eindeutigen Transaktionsdaten unterscheiden, die in Assoziation mit dem Transaktionsidentifikator gespeichert und unter Verwendung des Verschlüsselungsschlüssels verschlüsselt wurden; und
Entschlüsseln (S505) der erhaltenen zusätzlichen Daten unter Verwendung des erzeugten Verschlüsselungsschlüssels.

2. Verfahren gemäß Anspruch 1, wobei die Vielzahl von Bits, die normalisiert werden, einen Teilsatz einer Gesamtzahl von Bits beinhaltet, die in den eindeutigen Transaktionsdaten umfasst sind.

3. Verfahren gemäß Anspruch 2, wobei die eindeutigen Transaktionsdaten Daten mit hoher Varianz und Daten mit niedriger Varianz umfassen, wobei die Daten mit hoher Varianz eine höhere Varianz zwischen Transaktionen als die Daten mit niedriger Varianz aufweisen, und die Vielzahl von Bits, die normalisiert werden, mindestens die Bits der Daten mit hoher Varianz beinhalten.

4. Verfahren gemäß Anspruch 3, wobei das elektronische Bezahlsystem ein EMV-Bezahlsystem ist und die Daten mit hoher Varianz mindestens eine erste Vielzahl von Bits, die in einem Application-Cryptogram-ARQC-ARQC-Feld umfasst sind, und/oder eine zweite Vielzahl von Bits, die in einem Unpredictable-Number-Feld umfasst sind, beinhalten.

5. Verfahren gemäß Anspruch 3, wobei das elektronische Bezahlsystem ein 3D-Secure-Bezahlsystem ist und die Daten mit hoher Varianz mindestens eine erste Vielzahl von Bits, die in einem XID-Feld umfasst sind, beinhalten.

6. Verfahren gemäß Anspruch 3, wobei das elektronische Bezahlsystem ein 3D-Secure-v2-Bezahlsystem ist und die Daten mit hoher Varianz mindestens eine erste Vielzahl von Bits, die in einem Authentication-Value-Feld umfasst sind, beinhalten.

7. Verfahren gemäß einem der vorhergehenden Ansprüche, wobei die erste vorherbestimmte Schlüsselableitungsfunktion und/oder die zweite vorherbestimmte Schlüsselableitungsfunktion aus einer Vielzahl von verfügbaren Schlüsselableitungsfunktionen ausgewählt werden.

8. Verfahren gemäß einem der vorhergehenden Ansprüche, wobei der Verschlüsselungsschlüssel an einer ersten Vorrichtung in dem sicheren elektronischen Bezahlsystem erzeugt wird und das Erhalten der zusätzlichen Daten Folgendes beinhaltet:
Empfangen des Verschlüsselungsschlüssels von der ersten Vorrichtung an einer zweiten Vorrichtung; und
Empfangen der zusätzlichen Daten von einer dritten Vorrichtung an der zweiten Vorrichtung, wobei der Verschlüsselungsschlüssel, der von der ersten Vorrichtung empfangen wird, verwendet wird, um die zusätzlichen Daten an der zweiten Vorrichtung zu entschlüsseln.

9. Verfahren gemäß Anspruch 8, wobei das Verwenden des Verschlüsselungsschlüssels, um die zusätzlichen Daten an der zweiten Vorrichtung zu entschlüsseln, Folgendes beinhaltet:
Erzeugen eines privaten Schlüssels aus dem Verschlüsselungsschlüssel an der zweiten Vorrichtung; und
Verwenden des privaten Schlüssels, um die zusätzlichen Daten zu entschlüsseln.

10. Verfahren gemäß einem der vorhergehenden Ansprüche, wobei das Erhalten der zusätzlichen Daten Folgendes beinhaltet:
Abrufen der zusätzlichen Daten, die mit dem Transaktionsidentifikator assoziiert sind, aus einer Speichereinheit, die dazu konfiguriert ist, eine Vielzahl von Sätzen zusätzlicher Daten zu speichern, die jeweils mit einem unterschiedlichen Transaktionsidentifikator assoziiert sind.

11. Verfahren gemäß einem der vorhergehenden Ansprüche, wobei das Erzeugen des Transaktionsidentifikators Folgendes beinhaltet:
Vereinen der normalisierten eindeutigen Transaktionsdaten mit dem Verschlüsselungsschlüssel, um vereinte Daten zu erhalten; und
Anwenden der ersten vorherbestimmten Schlüsselableitungsfunktion auf die vereinten Daten, um den Transaktionsidentifikator zu erzeugen.

12. Ein rechnerlesbares Speichermedium, das dazu angeordnet ist, Rechnerprogrammanweisungen zu speichern, die, wenn sie ausgeführt werden, ein Verfahren gemäß einem der vorhergehenden Ansprüche durchführen.

13. Einrichtung zum Erzeugen eines Schlüssels in einem sicheren elektronischen Bezahlsystem, wobei die Einrichtung Folgendes beinhaltet:
ein Datennormalisierungsmodul, das zu Folgendem konfiguriert ist: Erhalten eindeutiger Transaktionsdaten, die sich auf eine Transaktion beziehen, wobei die eindeutigen Transaktionsdaten eine Vielzahl von Bits beinhalten, und Normalisieren der Vielzahl von Bits der Transaktionsdaten gemäß einem vorherbestimmten Normalisierungsformat;
einen Schlüsselerzeuger (613), der zu Folgendem konfiguriert ist: Erzeugen eines Transaktionsidentifikators zum eindeutigen Identifizieren der Transaktion unter einer Vielzahl von Transaktionen durch Anwenden einer ersten vorherbestimmten Schlüsselableitungsfunktion auf die normalisierten eindeutigen Transaktionsdaten, und Erzeugen eines Verschlüsselungsschlüssels basierend auf den normalisierten eindeutigen Transaktionsdaten, unter Verwendung einer zweiten vorherbestimmten Schlüsselableitungsfunktion; und
eine Entschlüsselungseinheit (620), die zu Folgendem konfiguriert ist: Erhalten zusätzlicher Daten, die mit dem Transaktionsidentifikator assoziiert sind, und Entschlüsseln der erhaltenen zusätzlichen Daten unter Verwendung des erzeugten Verschlüsselungsschlüssels,
wobei die zusätzlichen Daten Daten sind, die sich von den eindeutigen Transaktionsdaten unterscheiden, die in Assoziation mit dem Transaktionsidentifikator gespeichert und unter Verwendung des Verschlüsselungsschlüssels verschlüsselt wurden.

14. Einrichtung zum Erzeugen eines Schlüssels in einem sicheren elektronischen Bezahlsystem, wobei die Einrichtung Folgendes beinhaltet:
einen oder mehrere Prozessoren zum Ausführen von Rechnerprogrammanweisungen; und einen Speicher, der dazu angeordnet ist, Rechnerprogrammanweisungen zu speichern, die, wenn sie von dem einen oder den mehreren Prozessoren ausgeführt werden, die Einrichtung zu Folgendem veranlassen:
Erhalten eindeutiger Transaktionsdaten, die sich auf eine Transaktion beziehen, wobei die eindeutigen Transaktionsdaten eine Vielzahl von Bits beinhalten;
Normalisieren der Vielzahl von Bits der Transaktionsdaten gemäß einem vorherbestimmten Normalisierungsformat;
Erzeugen eines Transaktionsidentifikators zum eindeutigen Identifizieren der Transaktion unter einer Vielzahl von Transaktionen durch Anwenden einer ersten vorherbestimmten Schlüsselableitungsfunktion auf die normalisierten eindeutigen Transaktionsdaten;
Erzeugen eines Verschlüsselungsschlüssels basierend auf den normalisierten eindeutigen Transaktionsdaten, unter Verwendung einer zweiten vorherbestimmten Schlüsselableitungsfunktion;
Erhalten zusätzlicher Daten, die mit dem Transaktionsidentifikator assoziiert sind; und Entschlüsseln der erhaltenen zusätzlichen Daten unter Verwendung des erzeugten Verschlüsselungsschlüssels,
wobei die zusätzlichen Daten Daten sind, die sich von den eindeutigen Transaktionsdaten unterscheiden, die in Assoziation mit dem Transaktionsidentifikator gespeichert und unter Verwendung des Verschlüsselungsschlüssels verschlüsselt wurden.

## Revendications

1. Un procédé de génération d'une clé dans un système de paiement électronique sécurisé, le procédé comprenant :
l'obtention (S501) de données de transaction uniques relatives à une transaction, les données de transaction uniques comprenant une pluralité de bits ;
la normalisation (S502) des données de transaction uniques selon un format de normalisation prédéterminé ;
la génération (S503) d'un identifiant de transaction pour l'identification unique de la transaction parmi une pluralité de transactions par application d'une première fonction de dérivation de clé prédéterminée aux données de transaction uniques normalisées ;
la génération (S504) d'une clé de chiffrement sur la base des données de transaction uniques normalisées, à l'aide d'une deuxième fonction de dérivation de clé prédéterminée ;
l'obtention (S505) de données supplémentaires associées à l'identifiant de transaction, les données supplémentaires étant des données autres que les données de transaction uniques qui ont été stockées en association avec l'identifiant de transaction et chiffrées à l'aide de la clé de chiffrement; et
le déchiffrement (S505) des données supplémentaires obtenues à l'aide de la clé de chiffrement générée.

2. Le procédé de la revendication 1, dans lequel la pluralité de bits qui sont normalisés comprend un sous-ensemble d'un nombre total de bits inclus dans les données de transaction uniques.

3. Le procédé de la revendication 2, dans lequel les données de transaction uniques incluent des données à forte variance et des données à faible variance, les données à forte variance ayant une plus forte variance entre transactions que les données à faible variance, et la pluralité de bits qui sont normalisés comprennent au moins les bits des données à forte variance.

4. Le procédé de la revendication 3, dans lequel le système de paiement électronique est un système de paiement EMV, et les données à forte variance comprennent au moins une première pluralité de bits incluse dans un champ Application Cryptogram ARQC (cryptogramme d'application ARQC) et/ou une deuxième pluralité de bits incluse dans un champ Unpredictable Number (nombre imprédictible).

5. Le procédé de la revendication 3, dans lequel le système de paiement électronique est un système de paiement 3D Secure, et les données à forte variance comprennent au moins une première pluralité de bits incluse dans un champ XID.

6. Le procédé de la revendication 3, dans lequel le système de paiement électronique est un système de paiement 3D Secure v2, et les données à forte variance comprennent au moins une première pluralité de bits incluse dans un champ Authentication Value (valeur d'authentification).

7. Le procédé de l'une quelconque des revendications précédentes, dans lequel la première fonction de dérivation de clé prédéterminée et/ou la deuxième fonction de dérivation de clé prédéterminée sont sélectionnées parmi une pluralité de fonctions de dérivation de clé disponibles.

8. Le procédé de l'une quelconque des revendications précédentes, dans lequel la clé de chiffrement est générée au niveau d'un premier dispositif dans le système de paiement électronique sécurisé, et l'obtention des données supplémentaires comprend :
la réception de la clé de chiffrement en provenance du premier dispositif, au niveau d'un deuxième dispositif; et
la réception des données supplémentaires en provenance d'un troisième dispositif, au niveau du deuxième dispositif, la clé de chiffrement reçue en provenance du premier dispositif étant utilisée pour déchiffrer les données supplémentaires au niveau du deuxième dispositif.

9. Le procédé de la revendication 8, dans lequel l'utilisation de la clé de chiffrement pour déchiffrer les données supplémentaires au niveau du deuxième dispositif comprend :
la génération d'une clé privée à partir de la clé de chiffrement au niveau du deuxième dispositif ; et
l'utilisation de la clé privée pour déchiffrer les données supplémentaires.

10. Le procédé de l'une quelconque des revendications précédentes, dans lequel l'obtention des données supplémentaires comprend :
la récupération des données supplémentaires associées à l'identifiant de transaction, auprès d'une unité de stockage configurée pour stocker une pluralité d'ensembles de données supplémentaires associés chacun à un identifiant de transaction différent.

11. Le procédé de l'une quelconque des revendications précédentes, dans lequel la génération de l'identifiant de transaction comprend :
la combinaison des données de transaction uniques normalisées avec la clé de chiffrement pour obtenir des données combinées ; et
l'application de la première fonction de dérivation de clé prédéterminée aux données combinées pour générer l'identifiant de transaction.

12. Un support de stockage lisible par ordinateur conçu pour stocker des instructions de programme d'ordinateur qui, lorsqu'elles sont exécutées, mettent en œuvre un procédé selon l'une quelconque des revendications précédentes.

13. Appareil pour la génération d'une clé dans un système de paiement électronique sécurisé, l'appareil comprenant :
un module de normalisation de données configuré pour obtenir des données de transaction uniques relatives à une transaction, les données de transaction uniques comprenant une pluralité de bits, et normaliser la pluralité de bits des données de transaction selon un format de normalisation prédéterminé ;
un générateur de clé (613) configuré pour générer un identifiant de transaction pour l'identification unique de la transaction parmi une pluralité de transactions par application d'une première fonction de dérivation de clé prédéterminée aux données de transaction uniques normalisées, et générer une clé de chiffrement sur la base des données de transaction uniques normalisées, à l'aide d'une deuxième fonction de dérivation de clé prédéterminée ; et
une unité de déchiffrement (620) configurée pour obtenir des données supplémentaires associées à l'identifiant de transaction, et déchiffrer les données supplémentaires obtenues à l'aide de la clé de chiffrement générée,
les données supplémentaires étant des données autres que les données de transaction uniques qui ont été stockées en association avec l'identifiant de transaction et chiffrées à l'aide de la clé de chiffrement.

14. Appareil pour la génération d'une clé dans un système de paiement électronique sécurisé, l'appareil comprenant :
un ou plusieurs processeurs pour l'exécution d'instructions de programme d'ordinateur ; et de la mémoire conçue pour stocker des instructions de programme d'ordinateur qui, lorsqu'elles sont exécutées par les un ou plusieurs processeurs, amènent l'appareil à :
obtenir des données de transaction uniques relatives à une transaction, les données de transaction uniques comprenant une pluralité de bits ;
normaliser la pluralité de bits des données de transaction selon un format de normalisation prédéterminé ;
générer un identifiant de transaction pour l'identification unique de la transaction parmi une pluralité de transactions par application d'une première fonction de dérivation de clé prédéterminée aux données de transaction uniques normalisées ;
générer une clé de chiffrement sur la base des données de transaction uniques normalisées, à l'aide d'une deuxième fonction de dérivation de clé prédéterminée ;
obtenir des données supplémentaires associées à l'identifiant de transaction ; et
déchiffrer les données supplémentaires reçues à l'aide de la clé de chiffrement générée,
les données supplémentaires étant des données autres que les données de transaction uniques qui ont été stockées en association avec l'identifiant de transaction et chiffrées à l'aide de la clé de chiffrement.
